# FASCICULE DE BREVET EUROPEEN

(11) **EP 1 873 044 B1**
(45) Date de publication et mention de la délivrance du brevet: **04.03.2009**
(21) Numéro de dépôt: 07110695.9
(22) Date de dépôt: 20.06.2007
(51) Int. Cl.: B62D 37/02, B62D 35/00

(54) **Dispositif aérodynamique pour véhicule automobile**
Aerodynamische Vorrichtung für Kraftfahrzeug
Aerodynamic device for a vehicle

(30) Priorité: 22.06.2006 FR 0605623
(43) Date de publication de la demande: 02.01.2008
(73) Titulaire: Compagnie Plastic Omnium, 69007 Lyon (FR)
(72) Inventeur: Gilotte, Philippe, 01470 Benonces (FR)
(74) Mandataire: Remy, Vincent Noel Paul

(56) Documents cités:
- EP-A- 1 544 089
- WO-A-20/06105174
- FR-A1- 2 862 269
- JP-A- 9 118 270
- US-A1- 2003 214 199
- US-A1- 2005 121 240

## Description

La présente invention concerne un système aérodynamique pour véhicule automobile.

On connaît déjà un tel système visant à faciliter l'écoulement de l'air près des pièces de carrosserie du véhicule, plus précisément à éviter les turbulences qui engendrent une perte d'énergie et donc une augmentation de la consommation d'énergie du véhicule.

On sait que ces turbulences peuvent être générées dans des zones de décollement marquées par des ruptures d'incidence de pièces de carrosserie du véhicule, ces ruptures étant également appelées bords de fuite. Ces zones dites tourbillonnaires correspondent à des zones dans lesquelles une dépression se crée lorsque le véhicule roule, dépression causant le décollement de la couche limite de l'air. De telles zones se trouvent par exemple au voisinage de l'extrémité supérieure arrière du véhicule, formée par le raccord transversal entre le pavillon et le haut du hayon, ou encore au voisinage des montants de baie arrière. Des zones tourbillonnaires ou de dépression peuvent également se trouver au voisinage de l'extrémité supérieure avant du véhicule, formée par le raccord transversal entre le pavillon et le haut du pare-brise, au voisinage des montants de baie avant, des ailes, ou encore des pièces de carrosserie entourant les passages de roue.

Pour améliorer l'écoulement d'air dans ces zones tourbillonnaires, notamment à l'arrière du véhicule, on cherche à affiner ou prolonger ces bords de fuite, en adaptant la forme du hayon ou du pavillon. Toutefois, de telles pièces ne font pas disparaître totalement les turbulences, et sont relativement contraignantes du point de vue esthétique.

Un dispositif aérodynamique pour véhicule automobile conformément au préambule de la revendication 1 est connu de JP 09 118 270.

La présente invention vise à proposer un système aérodynamique plus efficace pour éviter le décollement de la couche limite, sans pour autant imposer de formes spéciales aux pièces de carrosserie.

A cet effet, l'invention a pour objet un système aérodynamique pour véhicule automobile, caractérisé en ce qu'il comprend des moyens électro-mécaniques agencés au voisinage d'une zone tourbillonnaire du véhicule, aptes à transformer de l'électricité en ondes vibratoires favorisant le recollement de l'air dans cette zone tourbillonnaire.

Ainsi, grâce aux moyens électro-mécaniques positionnés de façon adéquate sur le véhicule, on crée une onde de pression s'opposant aux tourbillons, ce qui favorise le recollement des lignes de courant.

En outre, le mouvement de l'air créé par les moyens électro-mécaniques permet de diminuer le bruit d'origine aérodynamique engendré par l'écoulement de l'air sur le véhicule. En effet, il n'est plus nécessaire de prévoir des adaptations de forme des pièces de carrosserie, qui pouvaient engendrer du bruit.

Selon un aspect de l'invention, les moyens électro-mécaniques comprennent un film surmoulé dans une pièce de carrosserie du véhicule, ce qui est particulièrement avantageux du point de vue esthétique car le surmoulage évite d'avoir à gérer des problèmes de jeux et affleurement et peut rendre invisible depuis l'extérieur la présence de moyens électro-mécaniques. Par exemple, le film sera surmoulé sur la paroi intérieure de la pièce de carrosserie.

On comprendra que les moyens électro-mécaniques peuvent créer des ondes acoustiques par vibration de la pièce de carrosserie. Ainsi, la pièce de carrosserie constitue une surface ou une membrane vibrante pleine, poreuse ou présentant des interstices, qui génère ou transmet des ondes de pression opposées à celles des tourbillons. Il en ressort que le système aérodynamique ne nécessite pas d'aménagement particulier à l'extérieur de la pièce de carrosserie, ce qui donne une plus grande liberté en matière d'esthétisme.

La pièce de carrosserie désigne ici une pièce extérieure du véhicule. De préférence, cette pièce de carrosserie est agencée au voisinage d'une zone tourbillonnaire, dans une zone de rupture d'incidence du véhicule, ou zone de bords de fuite, et est choisie parmi un ensemble comprenant un montant de baie avant ou arrière, un rétroviseur, un toit, un hayon, un becquet arrière, une aile, une pièce extérieure entourant les roues, telle qu'un pare-boue ou une extension d'aile.

Selon un mode de réalisation, les moyens électro-mécaniques sont constitués par un haut-parleur. En variante, ils pourraient être constitués par des moyens piézoélectriques classiques ou par un film en matière plastique piézoélectrique surmoulé dans la pièce de carrosserie. Selon une autre variante, les moyens électro-mécaniques sont obtenus par surmoulage d'un film semi-conducteur. Selon encore une autre variante, les moyens électro-mécaniques sont des polymères électro-actifs (polymères dont la longueur ou le volume varie de manière significative lorsqu'ils sont soumis à une stimulation électrique). Ces polymères électro-actifs peuvent prendre la forme d'un film électro-actif, par exemple un film élastomère diélectrique surmoulé dans la pièce de carrosserie.

De préférence, les ondes de pression générées par les moyens électro-mécaniques sont périodiques. Leur fréquence est fonction des périodes d'apparition ou de rotation des tourbillons observés dans la zone de décollement, lesquelles pouvant être mesurées mesurés en soufflerie.

L'invention a également pour objet l'ensemble d'une pièce de carrosserie de véhicule automobile et d'un système aérodynamique tel que précédent décrit.

L'invention sera mieux comprise à la lecture de la description qui va suivre, donnée uniquement à titre d'exemple et faite en se référant aux dessins dans lesquels :
- la figure 1 est un schéma des zones tourbillonnaires d'un véhicule ;
- la figure 2 est un schéma de l'arrière d'un véhicule selon l'état de la technique ;
- la figure 3 est un schéma de l'arrière d'un véhicule muni d'un système aérodynamique selon l'invention ;
- la figure 4 est un schéma d'un premier mode de réalisation de l'arrière du véhicule de la figure 3 et
- la figure 5 est un schéma d'un second mode de réalisation de l'arrière du véhicule de la figure 3.

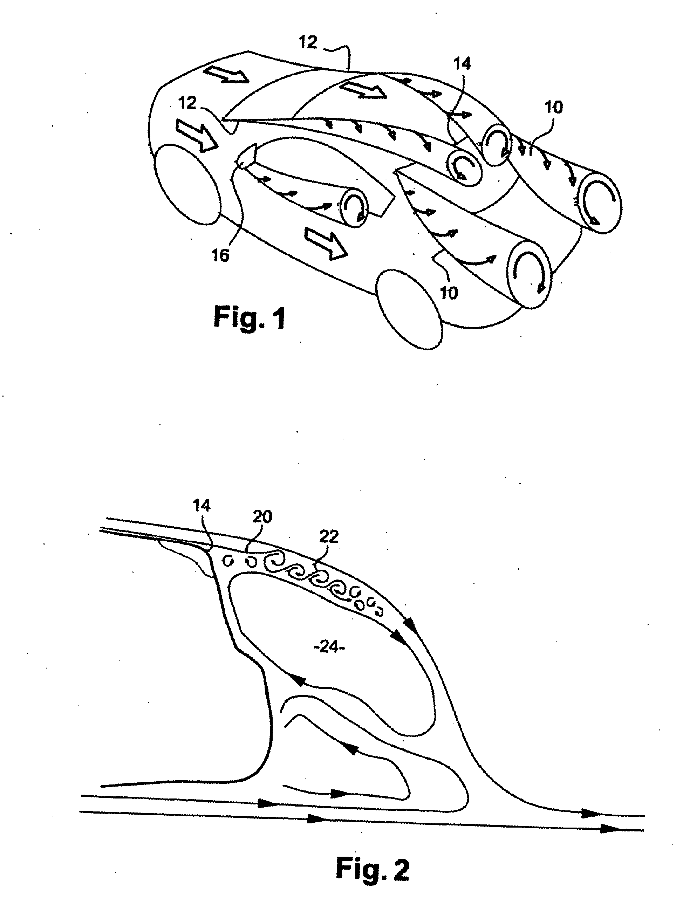

Comme on peut le voir sur la figure 1, on sait que les pièces de carrosserie d'un véhicule automobile ont des ruptures d'incidence, ce qui définit des zones tourbillonnaires, notamment les zones situées au voisinage des montants de baie arrière 10, des montants de baie avant 12, de l'extrémité supérieure arrière 14 du véhicule, constituée dans l'exemple par l'extrémité arrière du toit, des rétroviseurs 16.

Si l'on considère l'écoulement de l'air à l'arrière d'un véhicule de l'état de la technique, représenté sur la figure 2, on observe que l'écoulement est turbulent au voisinage de l'extrémité supérieure 14, en raison du décollement de la couche limite de l'air, représentée par la ligne 20. Les tourbillons 22 observés dans cette zone ont une certaine période d'apparition ou de rotation, dont la fréquence peut être mesurée en soufflerie. En dessous des petits tourbillons 22 se trouve une zone 24 d'écoulement tourbillonnaire qui peut se manifester par des enroulements.

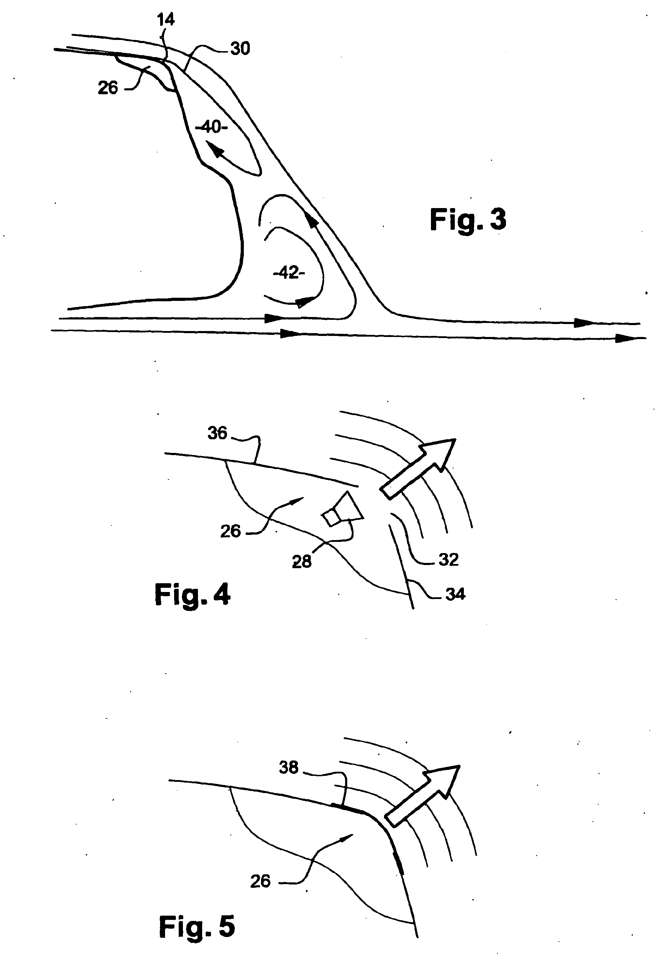

Un système aérodynamique 26 selon l'invention permet d'améliorer cet écoulement de l'air, comme on peut le voir sur la figure 3. Ce système comprend des moyens électro-mécaniques agencés juste derrière la pièce de carrosserie 14, capables de transformer de l'électricité en ondes vibratoires favorisant le recollement de l'air dans cette zone.

Selon le mode de réalisation représenté sur la figure 4, ces moyens électro-mécaniques sont constitués par un haut parleur 28, apte à générer des ondes de pression vibratoires s'opposant aux tourbillons, de façon à favoriser le recollement de la couche limite 30. Les ondes générées par ce haut parleur 28 circulent à travers un orifice 32 ménagé entre le hayon 34 et le pavillon 36 du véhicules.

Selon un autre mode de réalisation, représenté sur la figure 5, les moyens électro-mécaniques 26 sont constitués d'une membrane piézoélectrique 38, capable de vibrer lorsqu'elle est alimentée en courant, de façon à générer des ondes de façon similaire au haut parleur 28. Cette membrane 38 est surmoulée dans la pièce de carrosserie, ce qui laisse beaucoup de liberté en matière d'esthétisme pour la forme de la pièce de carrosserie.

Les moyens électro-mécaniques 26 sont réglés de façon à émettre des ondes dont la fréquence est déterminée à partir des périodes d'apparition ou de rotation de tourbillons observés et lesquelles peuvent être mesurées en soufflerie.

Comme on peut le voir sur la figure 3, grâce à l'invention, l'écoulement de l'air est beaucoup moins turbulent que dans l'état de la technique. En effet, les tourbillons 22 ont disparu et les zones d'enroulement tourbillonnaire 40, 42 ont été notablement diminuées.

On notera enfin que l'invention n'est pas limitée au modes de réalisation précédemment décrits.

En particulier, le film surmoulé 38 peut-être un film autre qu'une membrane piézoélectrique, notamment un film semi-conducteur ou une membrane de polymère électro-active, sous forme d'un film élastomère diélectrique.

## Revendications

1. Système aérodynamique pour véhicule automobile, comprenant des moyens électro-mécaniques (26) agencés au voisinage (14) d'une zone tourbillonnaire du véhicule, aptes à transformer de l'électricité en ondes vibratoires favorisant le recollement de l'air dans cette zone tourbillonnaire, **caractérisé en ce que** les moyens électro-mécaniques (26) comprenant un film (38) surmoulé dans une pièce de carrosserie du véhicule.

2. Système selon la revendication 1, dans lequel la pièce de carrosserie (14) est agencée dans une zone de rupture d'incidence du véhicule et est de préférence choisie parmi un ensemble comprenant un montant de baie avant (12) ou arrière (10), un rétroviseur (16), un toit (14), un hayon, un becquet arrière, une aile, une pièce extérieure entourant les roues telle qu'un pare-boue ou une extension d'aile.

3. Système selon la revendication 1 ou 2, dans lequel les moyens électro-mécaniques comprennent un haut-parieur (28).

4. Système selon la revendication 1 ou 2, dans lequel les moyens électro-mécaniques comprennent des moyens piézoélectriques, par exemple un film piézoélectrique (38) en matière plastique surmoulé dans une pièce de carrosserie.

5. Système selon la revendication 1 ou 2, dans lequel les moyens électro-mécaniques sont obtenus par surmoulage d'un film semi-conducteur.

6. Système selon la revendication 1 ou 2, dans lequel les moyens électro-mécaniques comprennent des polymères électro-actifs, de préférence sous forme d'un film élastomère diélectrique surmoulé dans la pièce de carrosserie.

7. Système selon l'une quelconque des revendications 1 à 6, dans lequel le mouvement d'air généré par les moyens électro-mécaniques est périodique, sa fréquence étant fonction des périodes d'apparition ou de rotation de tourbillons.

8. Ensemble d'une pièce de carrosserie de véhicule automobile et d'un système aérodynamique selon l'une quelconque des revendications 1 à 7.

## Claims

1. An aerodynamic system for a motor vehicle, the system comprising electro-mechanical means (26) arranged in the vicinity (14) of a turbulence-creating zone of the vehicle and suitable for transforming electricity into vibratory waves encouraging air to reattach in said turbulent zone, the system being **characterized in that** the electro-mechanical means (26) comprise a film (38) overmolded on a bodywork part of the vehicle.

2. A system according to claim 1, wherein the bodywork part (14) is arranged in an incidence discontinuity zone of the vehicle and is preferably selected from a set comprising a front or rear window upright (12 or 10), a rearview mirror (16), a roof (14), a tailgate, a rear spoiler, a fender, and an external part surrounding a wheel such as a mudguard or a fender extension.

3. A system according to claim 1 or claim 2, wherein the electro-mechanical means comprise a loudspeaker (28).

4. A system according to claim 1 or claim 2, wherein the electro-mechanical means comprise piezoelectric means, e.g. a piezoelectric film (38) of plastics material overmolded on a bodywork part.

5. A system according to claim 1 or claim 2, wherein the electro-mechanical means are obtained by overmolding a semiconductive film.

6. A system according to claim 1 or claim 2, wherein the electro-mechanical means comprise electro-active polymers, preferably in the form of a dielectric elastic film overmolded on the bodywork part.

7. A system according to any one of claims 1 to 6, wherein the air movement generated by the electro-mechanical means is periodic, its frequency being a function of the periods of vortex appearance or rotation.

8. An assembly of a motor vehicle bodywork part and an aerodynamic system according to any one of claims 1 to 7.

## Patentansprüche

1. Aerodynamisches System für ein Kraftfahrzeug, umfassend in der Nähe (14) einer Wirbelzone des Fahrzeugs angeordnete elektromechanische Mittel (26), fähig zum Umwandeln von Strom in Schwingungswellen, die einen Strömungsabriss in dieser Wirbelzone vermeiden, **dadurch gekennzeichnet, dass** die elektromechanischen Mittel (26) eine in einem Karosserieteil des Fahrzeugs abgeformte Folie (38) umfassen.

2. System nach Anspruch 1, wobei das Karosserieteil (14) in einer Zone des Strömungsabrisses des Fahrzeugs angeordnet ist und bevorzugt aus einer Gesamtheit umfassend einen Windschutzscheibenrahmen (12) oder Heckscheibenrahmen (10), einen Rückspiegel (16), ein Dach (14), eine Heckklappe, einen Heckspoiler, einen Kotflügel, ein Außenteil, das die Räder umgibt, wie ein Schutzblech oder eine Kotflügelverbreiterung, gewählt wird.

3. System nach Anspruch 1 oder 2, wobei die elektromechanischen Mittel einen Lautsprecher (28) umfassen.

4. System nach Anspruch 1 oder 2, wobei die elektromechanischen Mittel piezoelektrische Mittel, beispielsweise eine piezoelektrische Folie (38) aus Kunststoffmaterial, abgeformt in einem Karosserieteil, umfassen.

5. System nach Anspruch 1 oder 2, wobei die elektromechanischen Mittel durch Abformen einer Halbleiterfolie erzielt werden.

6. System nach Anspruch 1 oder 2, wobei die elektromechanischen Mittel elektroaktive Polymere, bevorzugt in Form einer dielektrischen Elastomerfolie, abgeformt im Karosserieteil, umfassen.

7. System nach einem der Ansprüche 1 bis 6, wobei die von den elektromechanischen Mitteln erzeugte Luftbewegung periodisch ist, und wobei deren Frequenz von den Perioden des Auftretens oder Drehens von Wirbeln abhängt.

8. Gesamtheit aus einem Karosserieteil eines Kraftfahrzeugs und einem aerodynamischen System nach einem der Ansprüche 1 bis 7.
